# EUROPEAN PATENT SPECIFICATION

(11) **EP 4 005 820 B1**
(45) Date of publication and mention of the grant of the patent: **23.09.2026**
(21) Application number: 20849974.9
(22) Date of filing: 15.07.2020
(51) Int. Cl.: B60C 1/00, C08K 5/548, C08L 9/00, B60C 11/00, C08K 3/36, C08L 7/00, B60C 11/03, C08L 9/06, B60C 11/12

(54) **RUBBER COMPOSITION FOR TIRE AND TIRE**
KAUTSCHUKZUSAMMENSETZUNG FÜR REIFEN UND REIFEN
COMPOSITION DE CAOUTCHOUC POUR PNEUMATIQUE ET PNEUMATIQUE

(30) Priority: 08.08.2019 JP 2019146500
(43) Date of publication of application: 01.06.2022
(73) Proprietor: Sumitomo Rubber Industries, Ltd., Kobe-shi, Hyogo 651-0072 (JP)
(72) Inventor: YAMADA, Ayuko, Kobe-shi, Hyogo 651-0072 (JP)
(74) Representative: Manitz Finsterwald Patent- und Rechtsanwaltspartnerschaft mbB
(86) International application number: PCT/JP2020/027529
(87) International publication number: WO 2021/024723

(56) References cited:
- EP-A1- 1 935 926
- WO-A1-2017/126633
- JP-A- 2003 327 755
- JP-A- 2004 530 004
- JP-A- 2010 539 269
- JP-A- 2013 159 742
- JP-A- 2018 035 325
- JP-A- S5 586 827
- US-A1- 2003 195 289
- US-A1- 2013 281 609
- US-A1- 2019 010 312

## Description

### TECHNICAL FIELD

The present invention relates to a tire having improved fuel efficiency, abrasion resistance, steering stability during high-speed running, and wet grip performance during high-speed running with good balance.

### BACKGROUND ART

A technique for optimizing properties of carbon black comprised in tread rubber is known as one of methods for achieving both fuel efficiency and abrasion resistance of a tire (for example, Patent Documents 1 and 2).

Also, amid a growing demand for achieving fuel efficiency of a tire, it has been required for achieving both steering stability and fuel efficiency at a high level.

### PRIOR ART DOCUMENT

### Patent Document

Patent Document 1: JP 2007-231179 A
Patent Document 2: JP 2019-26653 A

### SUMMARY OF THE INVENTION

### PROBLEM TO BE SOLVED BY THE INVENTION

An object of the present invention is to provide a tire having improved fuel efficiency, abrasion resistance, steering stability during high-speed running, and wet grip performance during high-speed running with good balance.

### MEANS TO SOLVE THE PROBLEM

As a result of intensive studies, the present inventor has found that, in a tire comprising a tread formed of a rubber composition that comprises an isoprene-based rubber, a styrene-butadiene rubber and silica in specific amounts, and in which 20°C tan δ and -20°C tan δ are within a predetermined range, fuel efficiency, abrasion resistance, steering stability during high-speed running, and wet grip performance during high-speed running are improved with good balance. Furthermore, the present inventor has found that the steering stability during high-speed running is further improved by setting a circumferential groove area/a grounding surface area and a lateral groove area/the grounding surface area of the tread to be within a predetermined range, and completed the present invention.

That is, the present invention relates to a tire as defined in claims 1-6.

### EFFECTS OF THE INVENTION

In the tire of the present disclosure comprising the tread formed of the rubber composition that comprises an isoprene-based rubber, a styrene-butadiene rubber and silica in specific amounts, and in which 20°C tan δ and -20°C tan δ are within a predetermined range, fuel efficiency, abrasion resistance, steering stability during high-speed running, and wet grip performance during high-speed running are improved with good balance. Furthermore, the steering stability during high-speed running is further improved by setting a circumferential groove area/a grounding surface area and a lateral groove area/ the grounding surface area of the tread to be within a predetermined range.

### BRIEF DESCRIPTION OF THE DRAWINGS

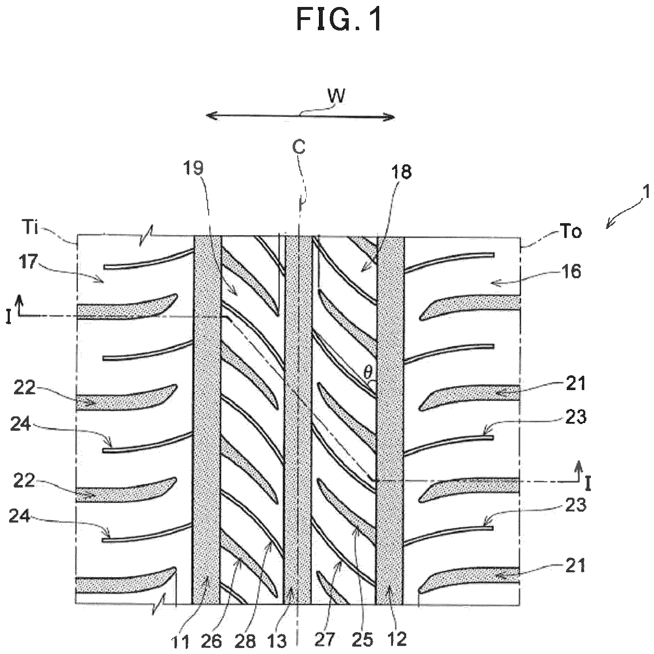

FIG. 1 is a schematic view of a grounding surface of a tire when a tread is pressed against a flat surface.

### EMBODIMENT FOR CARRYING OUT THE INVENTION

The tire according to one embodiment of the present disclosure is a tire comprising a tread formed of a rubber composition comprising an isoprene-based rubber and silica, wherein tan δ at 20°C (20°C tan δ) of the rubber composition and tan δ at -20°C (-20°C tan δ) of the rubber composition satisfy the following inequality (1) under a condition of an initial strain of 2%, a dynamic strain of 1%, and a frequency of 50Hz: $0.2 \leq \left|\left(-20°C tan δ\right)-\left(20°C tan δ\right)\right| \leq 0.4$ wherein the rubber composition comprises 50 parts by mass or more of silica based on 100 parts by mass of a rubber component comprising 10% by mass or more of an isoprene-based rubber, and wherein the rubber component comprises 30% by mass or more of styrene-butadiene rubber.

It is preferable that: the rubber composition of the tread (rubber composition for tread) comprises 50 parts by mass or more of silica having a nitrogen adsorption specific surface area (N₂SA) of 150 m²/g or more, based on 100 parts by mass of the rubber component comprising 10 to 65% by mass of an isoprene-based rubber, 30 to 85% by mass of a styrene-butadiene rubber, and 5 to 50% by mass of a butadiene rubber. Also, a styrene-butadiene rubber (preferably, a styrene-butadiene rubber having a weight-average molecular weight (Mw) of 250, 000 or more) and a silane coupling agent (preferably, a silane coupling agent having a mercapto group) are appropriately used.

It is preferable that: the tread has a circumferential groove continuously extending in a tire circumferential direction and a lateral groove extending in a tire width direction; and a circumferential groove area/a grounding surface area of the tread is 0.09 to 0.16 and a lateral groove area/the grounding surface area of the tread is 0.08 to 0.14.

A procedure for producing a tire comprising the rubber composition for tread that is one embodiment of the present disclosure will be described in detail below. Besides, in the present specification, a numerical range identified with "to" means to include the numerical values of both ends.

### <Rubber composite for tread>

In the tire according to the present disclosure, the tread is formed of a rubber composition comprising an isoprene-based rubber and silica, wherein tan δ at 20°C (20°C tan δ) of the rubber composition and tan δ at -20°C (-20°C tan δ) of the rubber composition satisfy the following inequality (1) under a condition of an initial strain of 2%, a dynamic strain of 1%, and a frequency of 50Hz: $0.2 \leq \left|\left(-20°C tan δ\right)-\left(20°C tan δ\right)\right| \leq 0.4$ wherein the rubber composition comprises 50 parts by mass or more of silica based on 100 parts by mass of a rubber component comprising 10% by mass or more of an isoprene-based rubber, and wherein the rubber component comprises 30% by mass or more of styrene-butadiene rubber.

When each tan δ of the rubber composition of the tread (rubber composition for tread) satisfies the above-described inequality (1), for the obtained tire, fuel efficiency, abrasion resistance, steering stability during high-speed running, and wet grip performance during high-speed running are improved with good balance. The rubber composition comprising an isoprene-based rubber as a main component and in which silica is highly dispersed is relatively flexible and, particularly, is easily affected by vibration during high-speed running, and it is considered that steering stability could be improved.

The rubber composition for tread according to the present disclosure comprises an isoprene-based rubber and silica, and is not particularly limited as long as it satisfies the above-described physical properties. However, it is to use a rubber composition comprising 50 parts by mass or more of silica based on 100 parts by mass of the rubber component comprising 10% by mass or more of the isoprene-based rubber and 30% by mass or more of styrene-butadiene rubber.

### <Rubber components>

The rubber composition for tread according to the present disclosure comprises, as a rubber component, an isoprene-based rubber. Also, it is preferable for the rubber composition for tread to comprise a styrene-butadiene rubber (SBR) and a butadiene rubber (BR).

### (Isoprene-based rubber)

As an isoprene-based rubber, for example, those common in the tire industry can be used, such as, for example, an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber (UPNR), and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is 10% by mass or more, more preferably 15% by mass or more, further preferably 20% by mass or more, particularly preferably 40% by mass or more, from the viewpoints of fuel efficiency and abrasion resistance. On the other hand, an upper limit of the content of the isoprene-based rubber in the rubber component is, but not particularly limited to, 70% by mass or less, from the viewpoint of wet grip performance.

### (SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable in that they can well improve fuel efficiency and abrasion resistance. Furthermore, hydrogenated additives of these SBRs (hydrogenated SBRs) and the like can also be used. These SBRs may be used alone, or two or more thereof may be used in combination.

Examples of the S-SBR that can be used in the present disclosure include S-SBRs manufactured and sold by JSR Corporation, Sumitomo Chemical Co., Ltd., Ube Industries, Ltd., Asahi Kasei Corporation, ZS Elastomer Co., Ltd., etc.

A styrene content of the SBR is preferably 15% by mass or more, more preferably 20% by mass or more, from the viewpoints of grip performance and abrasion resistance. On the other hand, the styrene content of the SBR is preferably 60% by mass or less, more preferably 50% by mass or less, from the viewpoints of temperature dependency of grip performance and abrasion resistance. Besides, in the present specification, the styrene content of the SBR is calculated by ¹H-NMR measurement.

A vinyl bond amount of the SBR is preferably 10 mol% or more, more preferably 13 mol% or more, further preferably 16 mol% or more, from the viewpoints of ensuring reactivity with silica, rubber strength, and abrasion resistance. Moreover, the vinyl bond amount of the SBR is preferably 70 mol% or less, more preferably 65 mol% or less, further preferably 60 mol% or less, from the viewpoints of prevention of increase in temperature dependence, wet grip performance, elongation at break, and abrasion resistance. Besides, in the present specification, the vinyl bond amount of the SBR (1,2-bond butadiene unit amount) is measured by infrared absorption spectrometry.

A weight-average molecular weight (Mw) of the SBR is preferably 250,000 or more, more preferably 500,000 or more, further preferably 1,000,000 or more, from the viewpoint of abrasion resistance. Moreover, the Mw is preferably 2,500,000 or less, more preferably 2,000,000 or less, from the viewpoints of cross-linking uniformity and the like. Besides, the Mw can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

When the rubber component comprises the SBR, the content thereof is 30% by mass or more, from the viewpoint of wet grip performance. Moreover, it is preferably 85% by mass or less, more preferably 80% by mass or less, further preferably 75% by mass or less, particularly preferably 70% by mass or less, from the viewpoint of abrasion resistance.

### (BR)

The BR is not particularly limited, and those common in the tire industry can be used such as, for example, a BR having a cis 1,4 bond content of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

Examples of the high cis BR include, for example, BR1220 manufactured by Zeon Corporation, BR130B, BR150B, BR150L manufactured by Ube Industries, Ltd., BR730 manufactured by JSR Corporation, and the like. When the high cis BR is compounded, low temperature characteristics and abrasion resistance can be improved. Examples of the rare-earth-based BR include, for example, BUNA-CB25 manufactured by LANXESS, and the like.

Examples of the SPB-containing BR include those in which 1,2-syndiotactic polybutadiene crystal is chemically bonded with BR and dispersed, but not those in which the crystal is simply dispersed in the BR. Examples of such SPB-containing BR include VCR-303, VCR-412, VCR-617 manufactured by Ube Industries, Ltd, and the like.

Examples of modified BRs include those obtained by adding a tin compound after polymerizing 1,3-butadiene by a lithium initiator, the end of which is further bonded by tin-carbon bond (a tin-modified BR), a butadiene rubber (modified BR for silica) having a condensed alkoxysilane compound at its active end, and the like. Examples of such modified BRs include, for example, BR1250H (tin-modified) manufactured by ZS Elastomer Co., Ltd., an S-modified polymer (modified for silica), and the like.

A weight-average molecular weight (Mw) of the BR is preferably 300,000 or more, more preferably 350,000 or more, further preferably 400,000 or more, from the viewpoints of abrasion resistance and grip performance, etc. Moreover, it is preferably 2,000,000 or less, more preferably 1,000,000 or less, from the viewpoints of cross-linking uniformity, etc. Besides, the Mw can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

When the rubber component comprises the BR, the content thereof is preferably 5% by mass or more, more preferably 10% by mass or more, further preferably 15% by mass or more, from the viewpoint of abrasion resistance. Moreover, it is preferably 40% by mass or less, more preferably 35% by mass or less, further preferably 30% by mass or less, particularly preferably 25% by mass or less, from the viewpoint of wet grip performance.

### (Other rubber components)

As the rubber components according to the present disclosure, rubber components other than the above-described isoprene-based rubbers, SBRs and BRs may be compounded. As other rubber components, cross-linkable rubber components commonly used in the rubber industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

### <Filler>

The rubber composition for tread according to the present disclosure comprises silica as a filler. Also, it is preferable for the rubber composition for tread to comprise carbon black.

### <Silica>

When the rubber composition for tread according to the present disclosure comprises silica, fuel efficiency, abrasion resistance, and steering stability during high-speed running can be improved. Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone, or two or more thereof may be used in combination.

A nitrogen adsorption specific surface area (N₂SA) of silica is preferably 140 m²/g or more, more preferably 170 m²/g or more, further preferably 180 m²/g or more, particularly preferably 200 m²/g or more, from the viewpoints of fuel efficiency and abrasion resistance. Moreover, it is preferably 350 m²/g or less, more preferably 300 m²/g or less, further preferably 250 m²/g or less, from the viewpoints of fuel efficiency and processability. Besides, the N₂SA of silica in the present specification is a value measured by a BET method according to ASTM D3037-93.

An average primary particle size of silica is preferably 20 nm or less, more preferably 18 nm or less, further preferably 16 nm or less. A lower limit of the average primary particle size is, but not particularly limited to, preferably 1 nm or more, more preferably 3 nm or more, further preferably 5 nm or more. When the average primary particle size of silica is within the above-described ranges, silica dispersibility can be more improved, and reinforcing property, fracture characteristics, and abrasion resistance can be further improved. Besides, the average primary particle size of silica can be calculated by observing silica with a transmission or scanning electron microscope, measuring 400 or more primary particles of silica observed in the field of view, and averaging them.

A content of silica based on 100 parts by mass of the rubber component is 50 parts by mass or more, preferably 55 parts by mass or more, further preferably 60 parts by mass or more, from the viewpoints of improvement of fuel efficiency, abrasion resistance, and steering stability during high-speed running. Moreover, it is preferably 150 parts by mass or less, preferably 130 parts by mass or less, further preferably 110 parts by mass or less, from the viewpoint of suppressing deterioration of fuel efficiency and abrasion resistance due to deterioration of silica dispersibility in a rubber.

### (Carbon black)

Carbon black is not particularly limited, and those common in the tire industry can be used such as GPF, FEF, HAF, ISAF, and SAF, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and, besides those, in-house synthesized products and the like can also be appropriately used. They may be used alone, or two or more thereof may be used in combination.

A nitrogen adsorption specific surface area (N₂SA) of carbon black is preferably 50 m²/g or more, more preferably 80 m²/g or more, further preferably 100 m²/g or more, from the viewpoints of weather resistance and reinforcing property. Moreover, it is preferably 250 m²/g or less, more preferably 220 m²/g or less, from the viewpoints of dispersibility, fuel efficiency, fracture characteristics, and durability. Besides, the N₂SA of carbon black in the present specification is a value measured according to JIS K 6217-2 "Carbon black for rubber industry-Fundamental characteristics-Part 2: Determination of specific surface area-Nitrogen adsorption methods-Single-point procedures" A Method.

When the rubber composition comprises the carbon black, the content there of is, from the viewpoints of weather resistance and reinforcing property, preferably 1 part by mass or more, preferably 3 parts by mass or more, further preferably 5 parts by mass or more based on 100 parts by mass of the rubber component. Moreover, it is preferably 40 parts by mass or less, preferably 30 parts by mass or less, further preferably 20 parts by mass or less, from the viewpoint of fuel efficiency.

### (Other fillers)

As fillers other than silica and carbon black, those commonly used in the conventional tire industry can be compounded, such as aluminum hydroxide, calcium carbonate, alumina, clay, and talc.

A content of silica based on 100% by mass of a total content of silica and carbon black is preferably 50% by mass or more, preferably 60% by mass or more, further preferably 70% by mass or more, particularly preferably 80% by mass or more. Moreover, it is preferably 99% by mass or less, more preferably 97% by mass or less, further preferably 95% by mass or less.

A total content of silica and carbon black based on 100 parts by mass of the rubber component is preferably 60 parts by mass or more, more preferably 70 part by mass or more, further preferably 80 parts by mass or more, from the viewpoint of abrasion resistance. Moreover, it is preferably 180 parts by mass or less, more preferably 160 parts by mass or less, further preferably 140 parts by mass or less, from the viewpoint of suppressing deterioration of fuel efficiency and abrasion resistance.

### (Silane coupling agent)

It is preferable that silica is used in combination with a silane coupling agent. The silane coupling agent is not particularly limited, and any silane coupling agent conventionally used in combination with silica in the rubber industry can be used, and it is preferable that a silane coupling agent having a mercapto group is compounded.

It is preferable that the silane coupling agent having a mercapto group is a compound represented by the following formula (1) and/or a compound comprising a bond unit A represented by the following formula (2) and a bond unit B represented by the following formula (3). 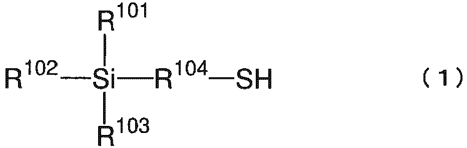 (wherein, R¹⁰¹, R¹⁰², and R¹⁰³ each independently represents a group represented by alkyl having 1 to 12 carbon atoms, alkoxy having 1 to 12 carbon atoms, or -O-(R¹¹¹-O)_{z}-R¹¹² (R¹¹¹s of z each independently represents a divalent hydrocarbon group having 1 to 30 carbon atoms; R¹¹² represents alkyl having 1 to 30 carbon atoms, alkenyl having 2 to 30 carbon atoms, aryl having 6 to 30 carbon atoms, or aralkyl having 7 to 30 carbon atoms; and z represents an integer of 1 to 30); and R¹⁰⁴ represents an alkylene having 1 to 6 carbon atoms.) 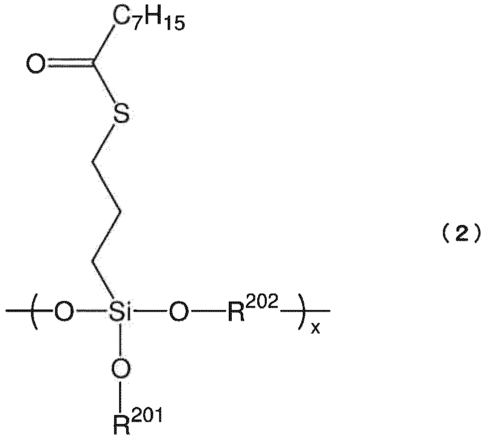 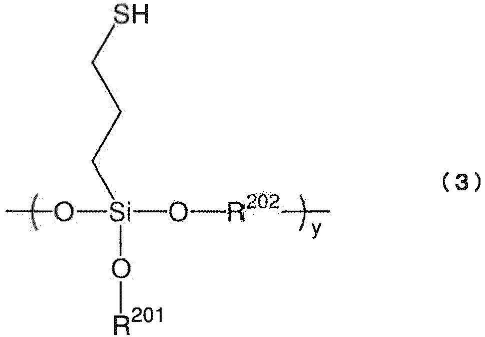 (wherein, x represents an integer of 0 or more; y represents an integer of 1 or more; R²⁰¹ represents alkyl having 1 to 30 carbon atoms, alkenyl having 2 to 30 carbon atoms, or alkynyl having 2 to 30 carbon atoms, which may be substituted with a hydrogen atom, a halogen atom, hydroxyl, or carboxyl; and R²⁰² represents alkylene having 1 to 30 carbon atoms, alkenylene having 2 to 30 carbon atoms, or alkynylene having 2 to 30 carbon atoms; where R²⁰¹ and R²⁰² may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (Si363 manufactured by Evonik Degussa GmbH), and the like, and the compound represented by the following formula can be appropriately used. They may be used alone, or two or more thereof may be used in combination.

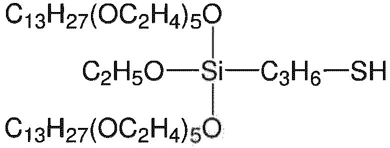

In the compound comprising the bond unit A represented by the formula (2) and the bond unit B represented by the formula (3), an increase in viscosity during processing is suppressed compared with a sulfide-based silane coupling agent such as bis-(3-triethoxysilylpropyl)tetrasulfide. Therefore, silica dispersibility becomes better, and fuel efficiency, wet grip performance, and elongation at break tend to be further improved. It is considered that this is because a sulfide part of the bond unit A is a C-S-C bond and thus is thermally stable as compared with tetrasulfide or disulfide, thereby resulting in a small increase in Mooney viscosity.

A content of the bond unit A is preferably 30 to 99 mol%, more preferably 50 to 90 mol%, from the viewpoint of suppressing an increase in viscosity during processing. Moreover, a content of the bond unit B is preferably 1 to 70 mol%, more preferably 5 to 65 mol%, further preferably 10 to 55 mol%. Furthermore, a total content of the bond units A and B is preferably 95 mol% or more, more preferably 98 mol% or more, particularly preferably 100 mol%. Besides, the content of the bond units A and B is an amount including the case where the bond units A and B are located at the terminal of the silane coupling agent. A form where the bond units A and B are located at the terminal of the silane coupling agent is not particularly limited, as long as it forms a unit corresponding to the formula (2) and the formula (3) representing the bond units A and B.

In the compound comprising the bond unit A represented by the formula (2) and the bond unit B represented by the formula (3), a total number of repetitions (x + y) of the number of repetitions of the bond unit A (x) and the number of repetitions of the bond unit B (y) is preferably in a range of 3 to 300. Within this range, mercaptosilane of the bond unit B is covered with -C₇H₁₅ of the bond unit A, so that shortening of scorch time can be suppressed, and a good reactivity with silica and rubber components can be secured.

Examples of the compound comprising the bond unit A represented by the formula (2) and the bond unit B represented by the formula (3) include, for example, NXT-Z30, NXT-Z45, NXT-Z60, and NXT-Z100 manufactured by Momentive Performance Materials, and the like. They may be used alone, or two or more thereof may be used in combination.

Other silane coupling agents different from the above-described silane coupling agent having a mercapto group may be compounded as silane coupling agents. Examples of other silane coupling agents include, for example, silane coupling agents having a sulfide group such as bis(3-triethoxysilylpropyl)disulfide and bis(3-triethoxysilylpropyl)tetrasulfide; silane coupling agents having a vinyl group such as vinyltriethoxysilane and vinyltrimethoxysilane; silane coupling agents having an amino group such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane, and the like. These silane coupling agents may be used alone, or two or more thereof may be used in combination.

When the rubber composition comprises the silane coupling agent (preferably, silane coupling agent having a mercapto group), the content thereof is, from the viewpoint of improvement in silica dispersibility, preferably 0.5 parts by mass or more, more preferably 1.0 part by mass or more, further preferably 2.0 parts by mass or more, particularly preferably 4.0 parts by mass or more based on 100 parts by mass of the rubber component. Moreover, it is preferably 20 parts by mass or less, more preferably 12 parts by mass or less, further preferably 10 parts by mass or less, particularly preferably 9.0 parts by mass or less, from the viewpoint of prevention of deterioration of abrasion resistance.

### <Other compounding agents>

The rubber composition for tread according to the present disclosure can appropriately comprise compounding agents commonly used in the conventional tire industry, such as, for example, oil, a tackifying resin, wax, processing aid, an antioxidant, stearic acid, zinc oxide, a vulcanizing agent such as sulfur, and a vulcanization accelerator, in addition to the above-described components.

Examples of oil include, for example, mineral oils such as aromatic oils, process oils, and paraffin oils, and the like. Among them, it is preferable to use process oils because they reduce burden on the environment.

When the rubber composition comprises the oil, the content thereof is, from the viewpoint of processability, preferably 10 parts by mass or more, more preferably 15 parts by mass or more, further preferably 20 parts by mass or more based on 100 parts by mass of the rubber component. Moreover, it is preferably 80 parts by mass or less, more preferably 70 parts by mass or less, further preferably 60 parts by mass or less, from the viewpoint of abrasion resistance. Besides, in the present specification, the content of oil also includes an amount of oil contained in an oil-extended rubber.

Examples of the tackifying resin include a cyclopentadiene-based resin, a coumarone resin, a petroleum-based resin (an aliphatic petroleum resin, an aromatic petroleum resin, an alicyclic petroleum resin, etc.), a phenol-based resin, a rosin derivative, and the like, preferably an aromatic petroleum resin.

Examples of the aromatic petroleum resin include, for example, the following aromatic vinyl-based resins and C9-based petroleum resins other than the aromatic vinyl-based resins, and the like, preferably aromatic vinyl-based resins.

As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and good in wet grip performance. As the aromatic vinyl-based resin, commercially available products such as, for example, SYLVARES SA85, SA100, SA120, SA140 manufactured by Arizona Chemical Company, and R2336 manufactured by Eastman Chemical Company are appropriately used. As the copolymer of α-methylstyrene and styrene, for example, SYLVATRAXX4401 manufactured by Arizona Chemical Company, and the like are appropriately used.

When the rubber composition comprises the tackifying resin, the content thereof is, from the viewpoint of wet grip performance, preferably 1 part by mass or more, more preferably 5 parts by mass or more based on 100 parts by mass of the rubber component. Moreover, it is preferably 50 parts by mass or less, more preferably 40 parts by mass or less, from the viewpoints of fuel efficiency and abrasion resistance.

When the rubber composition comprises wax, the content thereof is, from the viewpoint of weather resistance of a rubber, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. They may be used alone, or two or more thereof may be used in combination. Among them, a fatty acid metal salt, an amide ester, and a mixture of a fatty acid metal salt and an amide ester or a mixture of a fatty acid metal salt and a fatty acid amide are preferable, and a mixture of a fatty acid metal salt and a fatty acid amide is particularly preferable. Specifically, examples of processing aid include, for example, a fatty acid soap-based processing aid such as EF44 and WB16 manufactured by Schill & Seilacher.

When the rubber composition comprises the processing aid, the content thereof is, from the viewpoint of exhibiting an effect of improving processability, preferably 0.5 parts by mass or more, more preferably 1 part by mass or more based on 100 parts by mass of the rubber component. Moreover, it is preferably 10 parts by mass or less, more preferably 8 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, and antioxidants such as a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

When the rubber composition comprises the antioxidant, the content thereof is, from the viewpoint of ozone crack resistance of a rubber, preferably 0.5 parts by mass or more, more preferably 1 part by mass or more based on 100 parts by mass of the rubber component. Moreover, it is preferably 10 parts by mass or less, more preferably 5 parts by mass or less, from the viewpoints of abrasion resistance and wet grip performance.

When the rubber composition comprises stearic acid, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of vulcanization rate.

When the rubber composition comprises zinc oxide, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of abrasion resistance.

Sulfur is appropriately used as a vulcanizing agent. As sulfur, powdery sulfur, oil processing sulfur, precipitated sulfur, colloidal sulfur, insoluble sulfur, highly dispersible sulfur, and the like can be used.

When the rubber composition comprises the sulfur as a vulcanizing agent, the content thereof is, from the viewpoints of securing a sufficient vulcanization reaction and obtaining good grip performance and abrasion resistance, preferably 0.5 parts by mass or more, more preferably 1.0 part by mass or more based on 100 parts by mass of the rubber component. Moreover, it is preferably 3.0 parts by mass or less, more preferably 2.5 parts by mass or less, further preferably 2.0 parts by mass or less, from the viewpoint of deterioration.

Examples of vulcanizing agents other than sulfur include, for example, vulcanizing agents comprising a sulfur atom such as TACKIROL V200 manufactured by Taoka Chemical Co., Ltd., DURALINK HTS (sodium hexamethylene-1,6-bisthiosulfate dihydrate) manufactured by Flexsys, and KA9188 (1,6-bis(N,N'-dibenzylthiocarbamoyldithio)hexane) manufactured by LANXESS, organic peroxides such as dicumyl peroxide, and the like.

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and among them, sulfenamide-based vulcanization accelerators and guanidine-based vulcanization accelerators are preferable, and it is more preferable to use two of them in combination, from the viewpoint that desired effects can be obtained more appropriately.

Examples of the sulfenamide-based vulcanization accelerator include CBS (N-cyclohexyl-2-benzothiazolyl sulfenamide), TBBS (N-t-butyl-2-benzothiazolyl sulfenamide), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. They may be used alone, or two or more thereof may be used in combination.

When the rubber composition comprises the vulcanization accelerator, the content thereof is preferably 1 part by mass or more, more preferably 2 parts by mass or more based on 100 parts by mass of the rubber component. Moreover, the content of the vulcanization accelerator based on 100 parts by mass of the rubber component is preferably 8 parts by mass or less, more preferably 7 parts by mass or less, further preferably 6 parts by mass or less. When the content of vulcanization accelerator is within the above-described ranges, breaking strength and elongation tend to be secured.

The rubber composition according to the present disclosure can be produced by a known method. For example, it can be produced by a method of kneading components other than vulcanizing agents and vulcanization accelerators, of the above-described components, with a known kneading machine used in the general rubber industry such as a Banbury mixer, a kneader, and an open roll, then adding the vulcanizing agents and the vulcanization accelerators to the mixture to further knead them, and then vulcanizing them, and the like.

### <Tire>

The tire according to the present disclosure comprises a tread formed of the above-described rubber composition for tread, and examples of the tire according to the resent disclosure include a tire for a passenger car, a tire for a truck or bus, a tire for a two-wheeled vehicle, a high-performance tire, and the like. Besides, the high-performance tire described in the present specification is a tire which is good in grip performance, and a concept of the high-performance tire in the present specification includes a racing tire used for a racing vehicle.

The tire comprising a tread formed of the above-described rubber composition for tread can be produced by a usual method using the above-described rubber composition for tread. That is, the tire can be produced by extruding an unvulcanized rubber composition, obtained by compounding each of the above-described components based on the rubber component as necessary, into a tread shape, attaching it together with other tire members on a tire molding machine, and molding them by a usual method to form an unvulcanized tire, followed by heating and pressurizing this unvulcanized tire in a vulcanizing machine.

FIG. 1 shows a schematic view of a grounding surface when a tread is pressed against a flat surface. As shown in FIG. 1, a tread 1 constituting the tire according to the present disclosure has circumferential grooves 11, 12, and 13 continuously extending in a tire circumferential direction C (in an example of FIG. 1, these grooves extend in a linear manner along a tire circumferential direction) and lateral grooves 21 to 28 (sipes and lug grooves) extending in a width direction. When the tread of the tire, the tire being rim-assembled on a normal rim and being in a normal state with a normal internal pressure filled and no load applied, is pressed against a flat surface with a normal load applied, a ratio of a grounding surface area of the circumferential groove to a grounding surface are of the tread 1 (a circumferential groove area/a grounding surface area) is preferably 0.09 to 0.16 and a ratio of a grounding surface area of the lateral groove to the grounding surface of the tread 1 (a lateral groove area/ the grounding surface area) is preferably 0.08 to 0.14.

By setting the ratio of the circumferential grove area and the lateral grove area to the grounding surface area to be within the above-described ranges, it is possible to increase the rigidity of a land part of the tread, and synergy with the rubber flexibility of the rubber composition for tread according to the present disclosure makes it possible to improve rolling resistance while exhibiting a high steering stability during high-speed running. In a case where the circumferential groove area/the grounding surface area is less than 0.09 or the lateral groove area/the grounding surface area is less than 0.08, a proportion of the land part is too large, and thus drainage performance and grip performance tend to deteriorate. On the other hand, in a case where the circumferential groove area/the grounding surface area is greater than 0.16 or the lateral groove area/the grounding surface area is greater than 0.14, a sufficient rigidity of the land part of the tread cannot be obtained, and thus the steering stability tends to deteriorate. It is more preferable that the circumferential groove area/ the grounding surface area is 0.10 to 0.14 and it is more preferable that the lateral groove area/the grounding surface area is 0.09 to 0.12.

The "normal rim" is a rim defined for each tire in a standard system including standards, on which the tire is based, by the standard, for example, a "standard rim" in JATMA, "Design Rim" in TRA, or "Measuring Rim" in ETRTO.

The "normal internal pressure" is an air pressure defined for each tire by the standards, i.e., a "maximum air pressure" in JATMA, a maximum value described in Table "TIRE LOAD LIMITS AT VARIOUS COLD INFLATION PRESSURES" in TRA, or "INFLATION PRESSURE" in ETRTO.

The "normal load" is a load defined for each tire by the standards, i.e., a maximum load capacity in JATMA, a maximum value described in Table "TIRE LOAD LIMITS AT VARIOUS COLD INFLATION PRESSURES" in TRA, or "LOAD CAPACITY" in ETRTO.

The tread 1 has circumferential grooves 11, 12, and 13 continuously extending in the circumferential direction C. In FIG. 1, the three circumferential grooves 11, 12, and 13 are provided. However, the number of the circumferential grooves is not particularly limited and may be, for example, 2 to 5. Also, although the circumferential grooves 11, 12, and 13 extend in a linear manner along the circumferential direction C in the present disclosure, the circumferential grooves may extend in a zigzag shape along the circumferential direction C.

The tread 1 has: a pair of shoulder land parts 16 and 17 partitioned by the circumferential grooves 11, 12 and 13 in the width direction W; and center land parts 18 and 19 located between the pair of the shoulder land parts 16 and 17.

The shoulder land parts 16 and 17 are land parts provided at both ends in the width direction W in a tread part 2. In the present disclosure, the outer shoulder land part 16 is provided on the outside of a vehicle in the width direction W and the inner shoulder land part 17 is provided on the inside of the vehicle in the width direction W. In the present disclosure, the outer shoulder land part 16 is a land part formed between the circumferential groove 12 located on the outermost side during mounting of the tire to the vehicle and an outer tread end To. The inner shoulder land part 17 is a land part formed between the circumferential groove 11 located on the innermost side during mounting of the tire to the vehicle and an inner tread end Ti.

The shoulder land parts 16 and 17 are provided with: shoulder lug grooves 21 and 22 extending in a direction traversing the shoulder land parts 16 and 17; and shoulder sipes 23 and 24. The shoulder lug grooves 21 and 22 and the shoulder sipes 23 and 24 are provided on the pair of the shoulder land parts 16 and 17, respectively. Besides, in the present specification, the shoulder lug groove and the shoulder sipe provided on the outer shoulder land part 16 are referred to as the outer shoulder lug groove 21 and the outer shoulder sipe 23, respectively. Also, the shoulder lug groove and the shoulder sipe provided on the inner shoulder land part 17 are referred to as the inner shoulder lug groove 22 and the inner shoulder sipe 24, respectively.

Besides, in the present specification, the term "groove", including the lug grooves, means a hollow having a width larger than at least 2.0 mm. On the other hand, in the present specification, the term "sipe" means a narrow notch having a width of 2.0 mm or less, preferably, 0.5 to 2.0 mm.

The center land parts 18 and 19 are land parts provided on a central part in the width direction W of the tread part 2. In the present disclosure, two center land parts 18 and 19 are provided between the outer shoulder land part 16 and the inner shoulder land part 17 (between the circumferential groove 12 and the circumferential groove 11). Besides, the number of the center land parts is not particularly limited and may be one or more than one. In the present disclosure, an outer center land part 18 is provided on the outside of the vehicle in the central part of the tread part 2, and an inner center land part 19 is provided on the inside of the vehicle in the central part of the tread part 2. In the present disclosure, the outer center land part 18 is a land part formed between the circumferential groove 13 provided along a tire equator C and the circumferential groove 12 located on the outermost side during mounting of the tire to the vehicle. The inner center land part 19 is a land part formed between the circumferential groove 13 provided along the tire equator C and the circumferential groove 11 located on the innermost side during mounting of the tire to the vehicle.

The center land parts 18 and 19 are provided with: center lug grooves 25 and 26 extending in a direction traversing the center land parts 18 and 19; and center sipes 27 and 28. The center lug grooves 25 and 26 and the center sipes 27 and 28 are provided on the center land parts 18 and 19, respectively. Besides, in the present specification, the center lug groove and the center sipe provided on the outer center land part 18 are referred to as the outer center lug groove 25 and the outer center sipe 27, respectively. Also, the center lug groove and the center sipe provided on the inner center land part 19 are referred to as the inner center lug groove 26 and the inner center sipe 28, respectively.

Also, in the present disclosure, as shown in FIG. 1, the sipes 27 and 28 of the center land parts 18 and 19 extend to connect both edge parts in the width direction W of the center land parts 18 and 19. Although angles of the sipes 27 and 28 of the center land parts 18 and 19 are not particularly limited, it is preferable that an angle θ between: a straight line connecting both ends in the width direction W of the sipes 27 and 28 of the center land parts 18 and 19; and the circumferential groove 12 is, for example, in a range of 60 to 80 degrees. In this case, a water film can be scooped out in the center land parts 18 and 19, and braking performance on a wet road surface can be improved.

Although angles of the lug grooves 25 and 26 of the center land parts 18 and 19 are not particularly limited, it is preferable that an angle θ between: a straight line connecting the both ends on the width direction W of the lug grooves 25 and 26 of the center land parts 18 and 19; and the circumferential groove 12 is, for example, in a range of 60 to 80 degrees. Also, angles of the shoulder lug grooves 21 and 22 and the shoulder sipes 23 and 24 are not particularly limited, and, for example, it is preferable that these shoulder lug grooves and shoulder sipes are formed at an angle of 0 to 20 degrees relative to the circumferential direction C.

### EXAMPLE

Hereinafter, the present disclosure will be described based on Examples, though the present disclosure is not limited to these Examples.

Various chemicals used in Examples and Comparative examples are collectively shown below.
NR: TSR20
SBR1: Modified solution-polymerized SBR produced in Production example 1 which will be described later (styrene content: 30% by mass, vinyl bond amount: 52 mol%, Mw: 250,000, Tg: -23°C, a non-oil-extended product)
SBR2: SLR6430 manufactured by TRINSEO (S-SBR, styrene content: 40% by mass, vinyl bond amount: 18 mol%, Mw: 1,460,000, Tg: -39°C, an oil-extended product comprising 37.5 parts by mass of an oil content based on 100 parts by mass of the rubber component)
BR: UBEPOL BR (Registered Trademark) 150B manufactured by Ube Industries, Ltd. (vinyl bond amount: 1.5 mol%, cis 1,4-content: 97%, Mw: 440,000)
Carbon black: DIABLACK N220 manufactured by Mitsubishi Chemical Corporation (N₂SA: 115 m²/g)
Silica 1: Ultrasil (Registered Trademark) VN3 manufactured by Evonik Degussa GmbH (N₂SA: 175 m²/g, average primary particle size: 17 nm)
Silica 2: Ultrasil (Registered Trademark) 9000GR manufactured by Evonik Degussa GmbH (N₂SA: 210 m²/g, average primary particle size: 16 nm)
Silica 3: Zeosil Premium 200 MP manufactured by Solvay (N₂SA: 210 m²/g, average primary particle size: 14 nm)
Silica 4: Zeosil 115GR manufactured by RHODIA (N₂SA: 110 m²/g)
Silane coupling agent 1: NXT-Z45 manufactured by Momentive Performance Materials (silane coupling agent having a mercapto group, a copolymer of a bond unit A and a bond unit B (bond unit A: 55 mol%, bond unit B: 45 mol%))
Silane coupling agent 2: Si69 manufactured by Evonik Degussa GmbH (bis(3-triethoxysilylpropyl)tetrasulfide)
Oil: Diana Process Oil AH-24 manufactured by Idemitsu Kosan Co., Ltd
Wax: OZOACE 0355 manufactured by Nippon Seiro Co., Ltd.
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac RD manufactured by Ouchi Shinko Chemical Industry Co., Ltd. (poly (2,2,4-trimethyl-1,2-dihydroquinoline))
Stearic acid: Bead stearic acid "CAMELLIA" manufactured by NOF CORPORATION
Zinc oxide: Zinc oxide No. 1 manufactured by Mitsui Mining & Smelting Co., Ltd.
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))

### Production example 1: Synthesis of SBR1

An autoclave reactor subjected to nitrogen purge was charged with cyclohexane, tetrahydrofuran, styrene, and 1,3-butadiene. After adjusting temperature of contents in the reactor to 20°C, n-butyllithium was added to initiate polymerization. The polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, the mixture was subjected to removal of solvent by steam stripping and dried by a heat roll whose temperature was adjusted to 110°C to obtain a SBR4.

### (Examples and Comparative examples) - Examples and 6 are reference examples

According to the compounding formulations shown in Table 1, using a 1.7 L closed Banbury mixer, all chemicals other than sulfur and vulcanization accelerators were kneaded until a discharge temperature at 150°C to 160°C for 1 to 10 minutes to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was press-vulcanized at 170°C for 12 minutes to produce a test rubber composition.

Moreover, the above-described unvulcanized rubber composition was extruded into a shape of a tire tread with an extruder equipped with a mouthpiece having a predetermined shape and attached together with other tire members, forming an unvulcanized tire, and the unvulcanized tire was press-vulcanized under a condition of 170°C for 12 minutes to prepare a test tire (size: 155/65R14, rim: 14 × 4.5, internal pressure: 220 kPa).

The obtained test rubber composition and test tire were evaluated as follows. Table 1 shows evaluation results.

### <Fuel efficiency>

A strip test piece having a width of 4 mm, a length of 20 mm, and a thickness of 2 mm was punched out from a sheet-shaped vulcanized rubber composition and provided for a test. Using a spectrometer manufactured by Ueshima Seisakusho Co., Ltd., tan δ at 20°C (20°C tan δ) and tan δ at -20°C (-20°C tan δ) were measured under a condition of an initial strain of 2%, a dynamic strain of 1%, and a frequency of 50 Hz. Moreover, an inverse value of 20°C tan δ was indicated as an index with Comparative example 1 being 100 (fuel efficiency index). The larger the numerical value is, the smaller the rolling resistance is, and the better the fuel efficiency is. 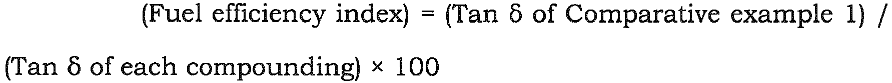 (Fuel efficiency index) = (Tan δ of Comparative example 1) / (Tan δ of each compounding) × 100

### <Abrasion resistance>

Each test tire was mounted on all wheels of a domestic FF vehicle with a displacement of 660 cc, and the FF vehicle was run on a test course with a dry asphalt road surface. After the FF vehicle was run 10,000 km on the test course, a groove depth of a tread part of each test tire was measured, and a running distance when the groove depth of each test tire decreases by 1 mm was calculated and indicated as an index by the following equation. The larger the index is, the better the abrasion resistance is. 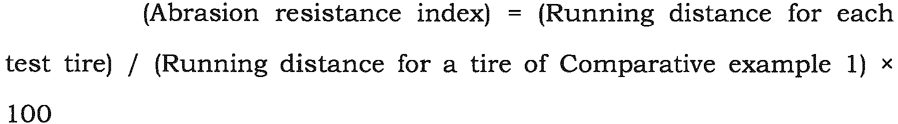 (Abrasion resistance index) = (Running distance for each test tire) / (Running distance for a tire of Comparative example 1) × 100

### <Steering stability during high-speed running>

Each test tire was mounted on all wheels of the domestic FF vehicle with a displacement of 660 cc, and the FF vehicle was run on the test course with a dry asphalt road surface. Handling characteristics were evaluated based on a test driver's respective feeling during straight running, lane change, and acceleration/deceleration when the FF vehicle was run at 120 km/hour by the test driver. The evaluation results were indicated as indexes with handling characteristics of a control tire (Comparative example 1) being 100, according to the following criteria, to calculate average values in the above-described three cases, and index values thereof were shown in the column of "Steering stability during high-speed running" in Tables 1 to 4. The larger the index value is, the better the handling characteristics is, and the better the steering stability during high-speed running is.

### (Standards for handling characteristics)

120: Better level than ever seen
110: Judged by the test driver that the performance was clearly improved
105: Felt a little better by the test driver
100: Standard

### <Wet grip performance during high-speed running>

Each test tire was mounted on all wheels of the domestic FF vehicle with a displacement of 660 cc, and a braking distance from an initial speed at 120 km/h on a wet road surface was measured. The measurement result was indicated as an index by the following equation with Comparative example 1 being 100. The larger the index is, the better the wet grip performance is. Besides, a performance target value shall be 100 or more, preferably 105 or more. 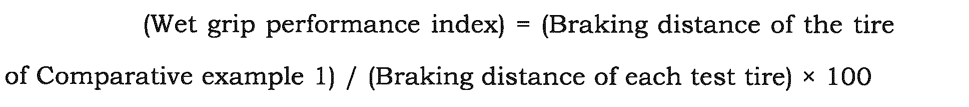 (Wet grip performance index) = (Braking distance of the tire of Comparative example 1) / (Braking distance of each test tire) × 100

A performance target value shall be 103 or more for a total performance of fuel efficiency, abrasion resistance, steering stability during high-speed running, and wet grip performance during high-speed running (an average value of fuel efficiency, abrasion resistance, steering stability during high-speed running, and wet grip performance during high-speed running).

**Table 1-1**

| | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Compounding amount (part bv mass) | | | | | | | | | | | | |
| NR | 20 | 70 | 50 | 50 | 50 | 50 | 50 | 50 | 50 | 50 | 50 | 50 |
| SBR 1 | 70 | 20 | 40 | - | 40 | - | - | - | - | - | - | - |
| SBR 2 | - | - | - | 55 | - | 27.5 | 55 | 55 | 55 | 55 | 55 | 55 |
| BR | 10 | 10 | 10 | 10 | 10 | 30 | 10 | 10 | 10 | 10 | 10 | 10 |
| Carbon black | 10 | 10 | 10 | 10 | 10 | 10 | 10 | 10 | 10 | 10 | 10 | 10 |
| Silica 1 | - | - | - | - | - | - | - | - | - | - | - | - |
| Silica 2 | 60 | 60 | 80 | 60 | 60 | 60 | 100 | - | 60 | 60 | 60 | 60 |
| Silica 3 | - | - | - | - | - | - | - | 60 | - | - | - | - |
| Silica 4 | - | - | - | - | - | - | - | - | - | - | - | - |
| Silane coupling agent 1 | 4.8 | 4.8 | 6.4 | 4.8 | 4.8 | 4.8 | 8.0 | 4.8 | 4.8 | 4.8 | 4.8 | 4.8 |
| Silane coupling agent 2 | - | - | - | - | - | - | - | - | - | - | - | - |
| Oil | 20 | 20 | 30 | 10 | 20 | 15 | 30 | 20 | 10 | 10 | 10 | 10 |
| Wax | 2.0 | 2.0 | 2.0 | 2.0 | 2.0 | 2.0 | 2.0 | 2.0 | 2.0 | 2.0 | 2.0 | 2.0 |
| Antioxidant 1 | 2.0 | 2.0 | 2.0 | 2.0 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 | 1.0 | 1.0 | 1.0 | 1.0 |
| Stearic acid | 2.0 | 2.0 | 2.0 | 2.0 | 2.0 | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 | 2.0 | 2.0 | 2.0 | 2.0 |
| Vulcanization accelerator 2 | 2.0 | 2.0 | 2.0 | 2.0 | 2.0 | 2.0 | 2.0 | 2.0 | 2.0 | 2.0 | 2.0 | 2.0 |
| Circumferential groove area/grounding surface area | 0.13 | 0.13 | 0.13 | 0.13 | 0.13 | 0.13 | 0.13 | 0.13 | 0.13 | 0.11 | 0.11 | 0.09 |
| Lateral groove area /grounding surface area | 0.12 | 0.12 | 0.12 | 0.12 | 0.12 | 0.12 | 0.12 | 0.12 | 0.10 | 0.10 | 0.08 | 0.08 |
| 20°C tan δ | 0.38 | 0.25 | 0.31 | 0.30 | 0.30 | 0.25 | 0.33 | 0.30 | 0.30 | 0.30 | 0.30 | 0.30 |
| - 20°C tan δ | 0.78 | 0.51 | 0.53 | 0.59 | 0.57 | 0.45 | 0.54 | 0.59 | 0.59 | 0.59 | 0.59 | 0.59 |
| Value of inequality (1) | 0.40 | 0.26 | 0.22 | 0.29 | 0.27 | 0.20 | 0.21 | 0.29 | 0.29 | 0.29 | 0.29 | 0.29 |
| Index | | | | | | | | | | | | |
| Fuel efficiency | 92 | 140 | 113 | 117 | 117 | 140 | 106 | 117 | 117 | 117 | 117 | 117 |
| Abrasion resistance | 105 | 110 | 108 | 112 | 107 | 112 | 115 | 115 | 112 | 112 | 112 | 112 |
| Steering stability during high-speed running | 103 | 105 | 108 | 106 | 104 | 107 | 120 | 108 | 108 | 110 | 112 | 114 |
| Wet grip performance | 110 | 115 | 112 | 115 | 108 | 110 | 120 | 117 | 116 | 116 | 115 | 115 |

**Table 1-2**

| | Comparative example | | | | | | |
|---|---|---|---|---|---|---|---|
| | 1 | 2 | 3 | 4 | 5 | 6 | 7 |
| Compounding amount (part by mass) | | | | | | | |
| NR | 20 | 20 | - | 20 | 20 | 20 | 20 |
| SBR 1 | 70 | 70 | 70 | 70 | 70 | 70 | 70 |
| SBR 2 | - | - | - | - | - | - | - |
| BR | 10 | 10 | 30 | 10 | 10 | 10 | 10 |
| Carbon black | 10 | 10 | 10 | 10 | 10 | 10 | 10 |
| Silica 1 | 60 | 80 | 80 | - | 80 | 40 | 80 |
| Silica 2 | - | - | - | - | - | - | - |
| Silica 3 | - | - | - | - | - | - | - |
| Silica 4 | - | - | - | 80 | - | - | - |
| Silane coupling agent 1 | 4.8 | 6.4 | 6.4 | 6.4 | - | 3.2 | 6.4 |
| Silane coupling agent 2 | - | - | - | - | 6.4 - | - | - |
| Oil | 20 | 30 | 30 | 30 | 30 | 10 | 30 |
| Wax | 2.0 | 2.0 | 2.0 | 2.0 | 2.0 | 2.0 | 2.0 |
| Antioxidant 1 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 |
| Stearic acid | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 |
| Vulcanization accelerator 2 | 2.0 | 2.0 | 2.0 | 2.0 | 2.0 | 2.0 | 2.0 |
| Circumferential groove area/grounding surface area | 0.13 | 0.13 | 0.13 | 0.13 | 0.13 | 0.13 | 0.18 |
| Lateral groove area / grounding surface area | 0.12 | 0.12 | 0.12 | 0.12 | 0.12 | 0.12 | 0.18 |
| 20°C tan δ | 0.35 | 0.50 | 0.38 | 0.42 | 0.42 | 0.34 | 0.50 |
| - 20°C tan δ | 0.85 | 0.69 | 0.51 | 0.85 | 0.60 | 0.90 | 0.69 |
| Value of inequality (1) | 0.50 | 0.19 | 0.13 | 0.43 | 0.18 | 0.56 | 0.19 |
| Index | | | | | | | |
| Fuel efficiency | 100 | 70 | 92 | 83 | 83 | 103 | 70 |
| Abrasion resistance | 100 | 102 | 100 | 90 | 105 | 102 | 102 |
| Steering stability during high-speed running | 100 | 104 | 106 | 97 | 108 | 80 | 90 |
| Wet grip performance | 100 | 102 | 85 | 95 | 100 | 90 | 104 |

From the results in Table 1, it can be found that, in the tire of the present disclosure comprising the tread formed of the rubber composition that comprises an isoprene-based rubber, a styrene-butadiene rubber and silica as defined in claim 1, and in which 20°C tan δ and -20°C tan δ are within a predetermined range, a total performance of fuel efficiency, abrasion resistance, steering stability during high-speed running, and wet grip performance during high-speed running are improved.

### REFERENCE SIGNS LIST

1 Tread
11, 12, 13 Circumferential groove
16 Outer shoulder land part
17 Inner shoulder land part
18 Outer center land part
19 Inner center land part
21 Outer shoulder lug groove
22 Inner shoulder lug groove
23 Outer shoulder sipe
24 Inner shoulder sipe
25 Outer center lug groove
26 Inner center lug groove
27 Outer center sipe
28 Inner center sipe
C Tire circumferential direction
To Outer tread end
Ti Inner tread end
W Tire width direction

## Claims

1. A tire comprising a tread formed of a rubber composition comprising an isoprene-based rubber and silica,
wherein tan δ at 20°C (20°C tan δ) of the rubber composition and tan δ at -20°C (-20°C tan δ) of the rubber composition satisfy a following inequality (1) under a condition of an initial strain of 2%, a dynamic strain of 1%, and a frequency of 50Hz: $0.2 \leq \left|\left(-20°C tan δ\right)-\left(20°C tan δ\right)\right| \leq 0.4$
wherein the rubber composition comprises 50 parts by mass or more of silica based on 100 parts by mass of a rubber component comprising 10% by mass or more of an isoprene-based rubber, and
wherein the rubber component comprises 30% by mass or more of styrene-butadiene rubber.

2. The tire of claim 1, wherein the tread has a circumferential groove continuously extending in a tire circumferential direction and a lateral groove extending in a tire width direction, and wherein a circumferential groove area/a grounding surface area of the tread is 0.09 to 0.16 and a lateral groove area/the grounding surface area of the tread is 0.08 to 0.14.

3. The tire of any one of claims 1 to 2, wherein the rubber composition comprises 50 parts by mass or more of silica having a nitrogen adsorption specific surface area (N₂SA) of 140 m²/g or more, based on 100 parts by mass of a rubber component comprising 10 to 65% by mass of an isoprene-based rubber, 30 to 85% by mass of a styrene-butadiene rubber, and 5 to 50% by mass of a butadiene rubber, wherein the N₂SA of the silica is a value measured by a BET method according to ASTM D3037-93.

4. The tire of any one of claims 1 to 3, wherein the rubber composition comprises a styrene-butadiene rubber having a weight-average molecular weight of 250, 000 or more.

5. The tire of any one of claims 1 to 4, wherein the rubber composition comprises a silane coupling agent having a mercapto group.

6. The tire of any one of claims 1 to 5, wherein an average primary particle size of the silica is 16 nm or less.

## Patentansprüche

1. Reifen, umfassend einen Laufstreifen, welcher mit einer Kautschukzusammensetzung gebildet ist, die einen isoprenbasierten Kautschuk und Siliciumdioxid umfasst,
wobei tan δ bei 20°C (20°C tan δ) der Kautschukzusammensetzung und tan δ bei -20°C (-20°C tan δ) der Kautschukzusammensetzung einer folgenden Ungleichung (1) unter Bedingungen einer Anfangsdehnung von 2%, einer dynamischen Dehnung von 1% und einer Frequenz von 50 Hz erfüllen: $0 , 2 \leq \left|\left(-20°C tan δ\right)-\left(20°C tan δ\right)\right| \leq 0 , 4$
wobei die Kautschukzusammensetzung 50 Massenteile oder mehr Siliciumdioxid umfasst, bezogen auf 100 Massenteile einer Kautschukkomponente, welche 10% Massenprozent oder mehr eines isoprenbasierten Kautschuks umfasst, und
wobei die Kautschukkomponente 30 Massen-% oder mehr Styrol-Butadien-Kautschuk umfasst.

2. Reifen nach Anspruch 1, wobei der Laufstreifen eine Umfangsrille, die sich kontinuierlich in einer Reifenumfangsrichtung erstreckt, und eine Querrille, die sich in einer Reifenbreitenrichtung erstreckt, aufweist, und wobei eine Umfangsrillenfläche/Bodenkontaktfläche des Laufstreifens 0,09 bis 0,16 beträgt und eine Querrillenfläche/Bodenkontaktfläche des Laufstreifens 0,08 bis 0,14 beträgt.

3. Reifen nach einem der Ansprüche 1 bis 2, wobei die Kautschukzusammensetzung 50 Massenteile oder mehr Siliciumdioxid mit einer spezifischen Stickstoffadsorptionsoberfläche (N₂SA) von 140 m²/g oder mehr umfasst, bezogen auf 100 Massenteile einer Kautschukkomponente, die 10 bis 65 Massen-% eines isoprenbasierten Kautschuks, 30 bis 85 Massen-% eines Styrol-Butadien-Kautschuks und 5 bis 50 Massen-% eines Butadienkautschuks umfasst, wobei die N₂SA des Siliciumdioxids ein nach einem BET-Verfahren gemäß ASTM D3037-93 gemessener Wert ist.

4. Reifen nach einem der Ansprüche 1 bis 3, wobei die Kautschukzusammensetzung einen Styrol-Butadien-Kautschuk mit einem gewichtsmittleren Molekulargewicht von 250.000 oder mehr umfasst.

5. Reifen nach einem der Ansprüche 1 bis 4, wobei die Kautschukzusammensetzung ein Silankopplungsmittel mit einer Mercaptogruppe umfasst.

6. Reifen nach einem der Ansprüche 1 bis 5, wobei eine durchschnittliche Primärpartikelgröße des Siliciumdioxids 16 nm oder weniger beträgt.

## Revendications

1. Pneumatique comprenant une bande de roulement formée d'une composition de caoutchouc comprenant un caoutchouc à base d'isoprène et de la silice,
dans lequel une valeur tan δ à 20 °C (20°C tan δ) de la composition de caoutchouc et une valeur tan δ à -20 °C (-20°C tan δ) de la composition de caoutchouc satisfont à l'inégalité (1) suivante dans une condition de contrainte initiale de 2 %, de contrainte dynamique de 1 %, et de fréquence de 50 Hz : $0 , 2 \leq \left|\left(-20°C tan δ\right)-\left(20°C tan δ\right)\right| \leq 0 , 4$
où la composition de caoutchouc comprend 50 parts en masse ou plus de silice pour 100 parts en masse d'un composant de caoutchouc comprenant 10 % en masse ou plus d'un caoutchouc à base d'isoprène, et
dans lequel le composant de caoutchouc comprend 30 % en masse ou plus de caoutchouc styrène-butadiène.

2. Pneumatique selon la revendication 1, dans lequel la bande de roulement a une rainure circonférentielle s'étendant en continu dans une direction circonférentielle du pneumatique et une rainure latérale s'étendant dans une direction de la largeur du pneumatique, et dans lequel un rapport aire de rainure circonférentielle / aire de surface de contact au sol de la bande de roulement est de 0,09 à 0,16 et un rapport aire de rainure latérale / aire de surface de contact au sol de la bande de roulement est de 0,08 à 0,14.

3. Pneumatique selon l'une quelconque des revendications 1 à 2, dans lequel la composition de caoutchouc comprend 50 parts en masse ou plus de silice ayant une surface spécifique d'adsorption d'azote (N₂SA) de 140 m²/g ou plus, sur la base de 100 parts en masse d'un composant de caoutchouc comprenant 10 à 65 % en masse d'un caoutchouc à base d'isoprène, 30 à 85 % en masse d'un caoutchouc styrène-butadiène, et 5 à 50 % en masse d'un caoutchouc butadiène,
dans lequel la N₂SA de la silice est une valeur mesurée par une méthode BET conformément à la norme ASTM D3037-93.

4. Pneumatique selon l'une quelconque des revendications 1 à 3, dans lequel la composition de caoutchouc comprend un caoutchouc styrène-butadiène ayant une masse moléculaire moyenne en poids de 250 000 ou plus.

5. Pneumatique selon l'une quelconque des revendications 1 à 4, dans lequel la composition de caoutchouc comprend un agent de couplage au silane comportant un groupe mercapto.

6. Pneumatique selon l'une quelconque des revendications 1 à 5, dans lequel une taille particulaire primaire moyenne de la silice est de 16 nm ou moins.
